# FASCICULE DE BREVET EUROPEEN

(11) **EP 3 249 474 B1**
(45) Date de publication et mention de la délivrance du brevet: **13.03.2019**
(21) Numéro de dépôt: 16171513.1
(22) Date de dépôt: 26.05.2016
(51) Int. Cl.: G04B 19/04

(54) **AIGUILLE D'AFFICHAGE ANALOGIQUE**
ANALOGER ZEIGER
ANALOGUE DISPLAY HAND

(43) Date de publication de la demande: 29.11.2017
(73) Titulaire: ETA SA Manufacture Horlogère Suisse, 2540 Grenchen (CH)
(72) Inventeur: Mertenat, Olivier, 4500 Solothurn (CH)
(74) Mandataire: Giraud, Eric

(56) Documents cités:
- EP-A1- 1 449 888
- EP-A1- 2 060 534
- EP-A1- 2 400 353
- US-A1- 2014 064 046

## Description

### Domaine de l'invention

L'invention se rapporte au domaine de l'horlogerie, et en particulier le domaine des organes d'affichage analogique tels qu'une aiguille de pièce d'horlogerie.

L'invention concerne aussi une pièce d'horlogerie et un procédé de fabrication d'une aiguille d'affichage.

### Arrière-plan de l'invention

La fabrication d'une aiguille destinée à être utilisée comme organe d'affichage dans une pièce d'horlogerie est particulièrement complexe, en particulier lorsqu'il s'agit d'une aiguille destinée à équiper une pièce d'horlogerie haut de gamme, pour laquelle l'aiguille doit présenter un aspect de surface particulièrement soigné, éventuellement muni de facettes.

Habituellement, les aiguilles sont fabriquées en laiton, en acier, en or, en aluminium, ou en un alliage spécial. Elles peuvent être galvanisées, recouvertes de peinture, oxydées, ou brutes lorsque le matériau utilisé est l'or. Elles sont généralement réalisées par usinage ou par étampage.

Un inconvénient de ces aiguilles d'affichage est que les matériaux utilisés ont une densité élevée, ce qui implique un moment d'inertie et une force de balourd élevés qui ont respectivement pour conséquence un flottement de l'aiguille et un glissement de l'aiguille lors d'un choc.

De plus, les techniques d'usinage et d'étampage impliquent des sollicitations mécaniques élevées, ce qui nécessite des opérations de relevage de l'aiguille pour obtenir une aiguille relativement plane.

Encore un autre inconvénient est que les techniques actuelles de fabrication des aiguilles ne permettent pas de réaliser toutes les formes souhaitées.

Le document US 2014/0064046 A1, divulgue une aiguille dont le corps est réalisé en matériau composite comprenant des fibres de carbone.

### Résumé de l'invention

L'invention a notamment pour objectif de pallier les différents inconvénients de ces techniques connues.

Plus précisément, un objectif de l'invention est de fournir une aiguille d'affichage présentant un poids réduit, et dans toute forme souhaitée.

L'invention a également pour objectif, au moins dans un mode de réalisation particulier, de fournir une aiguille d'affichage qui soit simple et peu coûteuse à mettre en oeuvre.

Ces objectifs, ainsi que d'autres qui apparaîtront plus clairement par la suite, sont atteints selon l'invention à l'aide d'une aiguille d'affichage destinée à équiper une pièce d'horlogerie, comprenant un corps et un canon dans lequel est aménagé un trou d'axe agencé pour ajuster l'aiguille d'affichage sur un axe d'entrainement.

Selon l'invention, le corps est réalisé en un matériau composite, le canon comprend sur toute ou partie de la périphérie extérieure une surface de liaison texturée avec le corps de l'aiguille pour assurer l'adhésion du matériau composite sur le canon.

Ainsi, l'objet de la présente invention, par ses différents aspects fonctionnels et structurels décrits ci-dessus, permet d'obtenir une aiguille d'affichage pouvant recevoir différentes tailles et/ou différentes formes sans se soucier du poids de l'aiguille.

Conformément à d'autres variantes avantageuses de l'invention :
- le corps de l'aiguille enveloppe la seconde portion du canon ;
- le canon est réalisé en un matériau métallique tel que du laiton ou du cuivre-béryllium ;
- le corps est réalisé en plastique à renfort fibres de carbone injecté ou en thermoplastique à renfort fibres de carbone injecté ;
- la surface supérieure du corps comporte des motifs en reliefs ou des facettes ;
- la surface supérieure du corps comporte un traitement.

L'invention concerne aussi une pièce d'horlogerie équipée d'au moins une aiguille d'affichage conforme à l'invention.

L'invention concerne également un procédé de fabrication d'aguilles d'affichage destinées à équiper des pièces d'horlogerie, chaque aiguille d'affichage comprenant un corps et un canon dans lequel est aménagé un trou d'axe agencé pour ajuster l'organe d'affichage sur un axe d'entrainement, le procédé comportant les étapes suivantes :
- placer les canons dans un moule ;
- injecter le matériau composite de manière à former une plaque de matériau composite moulée sur les canons ;
- réaliser un micro-usinage de la plaque de manière à réaliser le corps d'au moins une aiguille.

Conformément à d'autres variantes avantageuses du procédé selon l'invention :
- l'étape de micro-usinage est mise en oeuvre de manière à réaliser simultanément plusieurs aiguilles d'affichage dans la même plaque ;
- l'étape de micro-usinage est une découpe au laser, au jet d'eau ou fraiseuse CNC ;
- le procédé comprend au moins une étape de dépôt d'un revêtement sur au moins une face du corps de chaque aiguille d'affichage.
- le procédé comprend au moins une étape de micro-usinage de la face supérieure du corps pour y réaliser des motifs en relief ou des facettes.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue de dessus d'une aiguille d'affichage conforme à l'invention ;
- les figures 2a et 2b sont respectivement une vue de dessus et une vue en coupe selon la ligne A-A d'une aiguille d'affichage conforme à l'invention ;
- la figure 3 est une vue en plan d'un canon d'une aiguille d'affichage conforme à l'invention ;
- la figure 4 est un schéma d'un procédé de fabrication d'un aiguille d'affichage conforme à l'invention.

### Description détaillée des modes de réalisation préférés

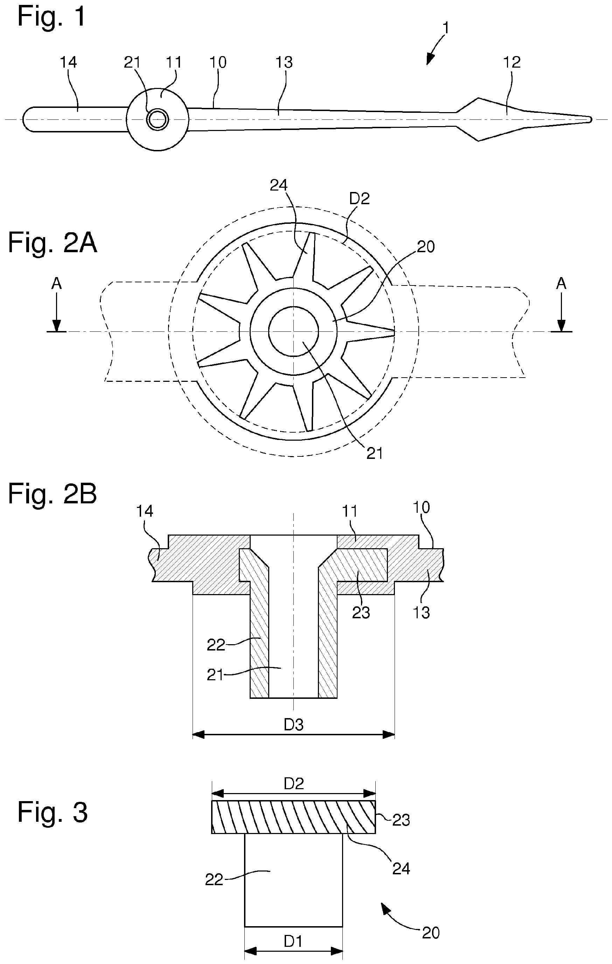

Un aiguille d'affichage selon l'invention va maintenant être décrite dans ce qui suit faisant référence conjointement aux figures 1 à 4.

L'aiguille d'affichage 1 est destinée à équiper une pièce d'horlogerie, l'aiguille comprenant un corps 10 et un canon 20 dans lequel est aménagé un trou d'axe 21 agencé pour ajuster l'aiguille d'affichage 1 sur un axe d'entrainement.

Selon le mode de réalisation représenté, le corps 10 comporte une tête 11 circulaire dans laquelle est logé le canon 20 pour permettre le montage de l'aiguille 1 sur l'axe d'entraînement de la montre. Le trou d'axe 21 du canon 20 est prévu pour être ajusté sur un axe d'entraînement, au moyen d'une opération de chassage par exemple.

Le canon 20 exerce une force de serrage sur l'axe d'entraînement qui permet de retenir axialement l'aiguille 1 sur l'axe d'entraînement et de lier en rotation ces deux éléments.

Le corps 10 comporte aussi une pointe 12 qui constitue le tronçon indicateur de l'aiguille 1, et est liée à la tête 11 par une poutre 13. La pointe 12 a ici la forme d'un triangle mais pourrait prendre toute autre forme adéquate en vue d'indiquer une position angulaire déterminée sur le cadran d'une pièce d'horlogerie.

Le corps 10 de l'aiguille 1 peut aussi comprendre un contrepoids 14, de forme rectangulaire et liée à la tête 12 dans le prolongement de la poutre 13. De même, le contrepoids 14 peut prendre toute autre forme, par exemple on pourrait imaginer que le contrepoids prenne la forme d'un logo.

Selon l'invention, le corps 10 est réalisé en un matériau composite, tel que du plastique à renfort fibres de carbone, du thermoplastique à renfort fibres de carbone, ou encore du polymère à renfort fibres de carbone. De tels matériaux sont très légers et résistants, permette de réduire le moment d'inertie de l'aiguille et d'obtenir les formes et tailles souhaitées des aiguilles.

Le canon se présente sous la forme d'un cylindre dans lequel est aménagé un trou d'axe 21 agencé pour ajuster l'aiguille d'affichage 1 sur un axe d'entrainement. Le canon 20 peut être réalisé en un matériau métallique tel que du laiton, du cuivre-béryllium, de l'aluminium ou encore de l'or, ces matériaux pouvant facilement être déformé lors du chassage du canon sur son axe. En effet, généralement le canon 20 est forcé sur un axe possédant un diamètre légèrement supérieur au diamètre intérieur du trou d'axe, les propriétés élastiques et plastiques des matériaux métalliques employés, rendent possible de chasser le canon 20 sur l'arbre de rotation sans altérer le corps 10 de l'aiguille en matériau composite.

Selon l'invention, le canon 20 comprend sur toute ou partie de la périphérie extérieure une surface de liaison 24 avec le corps 10 de l'aiguille pour assurer l'adhésion du matériau composite sur le canon 20. On pourrait imaginer que la surface de liaison 24 s'étende sur toute la périphérie extérieure du canon 20, ou alors qu'elle soit répartie géométriquement à certaines positions angulaires.

Comme on peut l'observer à la figure 1, le canon comprend une première portion 22 d'un diamètre D1 agencée pour être chassée sur un axe, et une seconde portion 23 d'un diamètre D2 supérieur à D1 agencée pour recevoir et maintenir le corps 10 de l'aiguille. On pourrait également utiliser un canon présentant le même diamètre sur toute sa hauteur.

Selon l'invention, la surface de liaison 24 peut s'étendre sur toute ou partie de la hauteur de la seconde portion 23. Par exemple, la surface de liaison 23 peut occuper toute la hauteur de la seconde portion du canon 20 ou bien seulement la moitié.

Selon un premier mode de réalisation de l'invention, la surface de liaison 24 peut être texturée de manière à assurer une meilleure adhésion du corps 10 de l'aiguille au canon 20. Par exemple, et comme illustré à la figure 3, on peut réaliser un moletage sur la seconde portion 23 du canon de manière que le matériau composite pénètre dans les stries du moletage.

Selon un autre mode de réalisation de l'invention, visible aux figures 2a et 2b, la surface de liaison 24 peut se présenter sous la forme d'un pignon ou d'une roue dentée, le matériau composite s'insérant alors entre les dents et permettant un bon maintien du corps 10 sur le canon 20.

La surface de liaison 24 permet ainsi d'assurer une bonne liaison radiale entre le canon 20 et le corps 11.

Comme on peut l'observer sur les figures 1 et 2b, le corps 10 de l'aiguille 1 peut envelopper la seconde portion 24 du canon 20. L'aiguille présente une portion surmoulée de diamètre D3 sous la seconde portion 23 de manière à fournir un bon maintien axial, le diamètre D3 étant inférieur au diamètre D2 de la seconde portion 23 du canon 20.

Selon un mode de réalisation de l'invention, la surface supérieure du corps 10 de l'aiguille 1 peut comporter des motifs en reliefs ou des facettes de manière à habiller l'aiguille.

Encore selon un autre mode de réalisation de l'invention, la surface supérieure du corps 10 de l'aiguille 1 peut recevoir un revêtement, par exemple métallique. Ce revêtement peut être déposé selon des techniques de dépôt chimique ou physique en phase vapeur («Chemical Vapour Deposition» ou «Physical Vapour Deposition»).

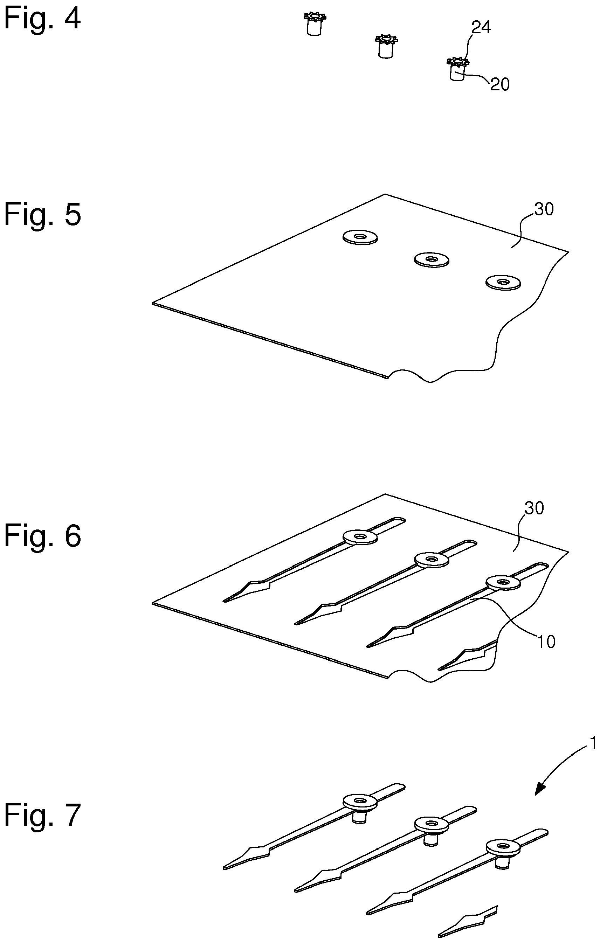

Sur les figures 4 à 7, on a représenté plusieurs étapes d'un procédé pour la fabrication d'aiguilles d'affichage 1 conforme aux enseignements de l'invention.

L'invention concerne aussi un procédé de fabrication d'aiguilles d'affichage 1 destinées à équiper des pièces d'horlogerie, chaque aiguille d'affichage comprenant un corps 10 et un canon 20 dans lequel est aménagé un trou d'axe 21 agencé pour ajuster l'aiguille d'affichage sur un axe d'entrainement. Le procédé comprend les étapes suivantes :
- placer les canons 20 dans un moule ;
- injecter le matériau composite de manière à former une plaque 30 de matériau composite moulée sur les canons 20, les canons devenant solidaires de la plaque 30 grâce aux surfaces de liaison des canons ;
- réaliser un micro-usinage de la plaque 30 de manière à réaliser le corps d'au moins une aiguille 1.

Sur la figure 4, on a représenté une série de canons 20 avant la mise en oeuvre du procédé selon l'invention, c'est-à-dire avant leur mise en place dans le moule.

La figure 5 illustre l'étape d'injection du matériau composite dans le moule comprenant les canons 20, de manière à former une plaque 30 de matériau composite moulée sur les canons 20.

La figure 6 illustre la plaque de matériau composite 30 laquelle les aiguilles 1 sont micro-usinées dans la plaque 30. Le micro-usinage peut être réalisé par le biais d'une découpe au laser, d'une découpe au jet d'eau, au plasma ou encore au moyen d'une fraiseuse CNC.

L'étape finale de la fabrication des aiguilles 1 consiste à libérer les aiguilles 1 de la plaque de matériau composite 30.

Avantageusement, une série de plusieurs aiguilles 1 est réalisée simultanément dans une même plaque 30 de matériau composite.

Le procédé selon l'invention peut comprendre au moins une étape au cours de laquelle un revêtement, par exemple métallique, est déposé la plaque 30 de matériau composite. Ce revêtement peut être déposé selon des techniques de dépôt chimique ou physique en phase vapeur (« Chemical Vapour Déposition » ou « Physical Vapour Déposition »).

Une telle étape peut être mise en oeuvre lorsque la plaque 30 de matériau composite a été moulée sur les canons.

Selon l'invention, le procédé peut comprendre au moins une étape de micro-usinage de la face supérieure du corps pour y réaliser des motifs en relief ou des facettes. Il peut s'agir de motifs géométriques ou autres, ce qui permet d'obtenir des effets optiques intéressants. De tels motifs géométriques peuvent, par exemple, donner un aspect de type guillochage à la surface des aiguilles.

Une telle étape peut être mise en oeuvre lorsque les aiguilles 1 sont encore portées par la plaque 30 de matériau composite.

On peut également imaginer un moule spécifique de manière à former des facettes sur la plaque 30 de matériau composite lors de l'injection de ce dernier sur les canons 20.

On note que le procédé de fabrication d'aiguilles 1 selon l'invention permet de réaliser facilement des aiguilles 1 ayant des formes et des aspects extérieurs très variés.

Avantageusement, le procédé selon l'invention peut être mis en oeuvre en parallèle sur plusieurs plaques 30 de matériau composite, de manière à réaliser simultanément, dans plusieurs plaques de matériau composite des aiguilles de caractéristiques similaires.

Grâce à ces différents aspects de l'invention, on dispose d'une aiguille d'affichage présentant un poids spécifique inférieur aux matériaux utilisés jusqu'à ce jour, ce qui permet de réduire le moment d'inertie et la force de balourd de cette dernière. L'invention permet également d'obtenir toute forme d'aiguille souhaitée.

La description qui précède correspond à un mode de réalisation préféré et ne saurait en aucun cas être considérée comme limitative, en ce qui concerne plus particulièrement la forme décrite pour les différents éléments structurels composant l'aiguille ou leurs matériaux. L'homme du métier ne rencontrera pas de difficulté particulière pour choisir, par exemple pour le corps de l'aiguille, tout autre matériau présentant les propriétés mécaniques nécessaires à la mise en oeuvre de la présente invention.

Les applications possibles pour une telle aiguille sont très nombreuses puisque la présente invention peut être mise en oeuvre pour tout type d'appareil portable présentant une aiguille, notamment à la main ou au poignet.

### NOMENCLATURE

1. Aiguille,
10. Corps,
11. Tête,
12. Pointe,
13. Poutre,
14. Contrepoids,
20. Canon,
21. Trou d'axe,
22. Première portion du canon,
23. Seconde portion du canon,
24. Surface de liaison,
30. Plaque de matériau composite,
D1. Diamètre de la première portion,
D2. Diamètre de la seconde portion,
D3. Diamètre de la partie inférieure.

## Revendications

1. Aiguille d'affichage (1) destinée à équiper une pièce d'horlogerie, comprenant un corps (10) et un canon (20) dans lequel est aménagé un trou d'axe (21) agencé pour ajuster l'aiguille d'affichage (1) sur un axe d'entrainement, le corps (10) étant réalisé en un matériau composite, le canon (20) comprenant une première portion (22) d'un diamètre D1, et une seconde portion (23) d'un diamètre D2 supérieur à D1 et le canon comprenant encore, sur toute ou partie de sa périphérie extérieure, une surface de liaison (24) avec le corps (10) de l'aiguille d'affichage (1) pour assurer l'adhésion du matériau composite sur le canon (20), **caractérisée en ce que** la surface de liaison (24) est texturée et s'étend sur toute ou partie de la hauteur de la seconde portion (23).

2. Aiguille d'affichage (1) selon la revendication 1, dans laquelle le corps (10) de l'aiguille d'affichage (1) enveloppe la seconde portion (23) du canon (20).

3. Aiguille d'affichage (1) selon l'une des revendications 1 à 2, dans laquelle le canon (20) est réalisé en un matériau métallique tel que du laiton ou du cuivre-béryllium.

4. Aiguille d'affichage (1) selon l'une des revendications 1 à 3, dans laquelle le corps (10) est réalisé en plastique à renfort fibres de carbone injecté ou en thermoplastique à renfort fibres de carbone injecté.

5. Aiguille d'affichage (1) selon l'une des revendications 1 à 3, dans laquelle la surface supérieure du corps (10) comporte des motifs en reliefs ou des facettes.

6. Aiguille d'affichage (1) selon l'une des revendications 1 à 5, dans laquelle la surface supérieure du corps (10) comporte un traitement.

7. Pièce d'horlogerie **caractérisée en ce qu'**elle comporte au moins une aiguille d'affichage (1) selon l'une des revendications précédentes.

8. Procédé de fabrication d'aguilles d'affichage (1) destinées à équiper des pièces d'horlogerie, chaque aiguille d'affichage comprenant un corps (10) et un canon (20) dans lequel est aménagé un trou d'axe (21) agencé pour ajuster l'aiguille d'affichage (1) sur un axe d'entrainement, **caractérisé en ce qu'**il comporte les étapes suivantes :
- placer au moins un canon (20) dans un moule ;
- injecter le matériau composite de manière à former une plaque (30) de matériau composite moulée sur ledit au moins un canon (20) de telle manière que ledit au moins un canon (20) soit solidaire de la plaque (30) ;
- réaliser un micro-usinage de la plaque (30) de manière à réaliser le corps (10) d'au moins une aiguille (1).

9. Procédé de fabrication selon la revendication 8, dans lequel l'étape de micro-usinage est mise en oeuvre de manière à réaliser simultanément plusieurs aiguilles d'affichage (1) dans la même plaque (30) de matériau composite.

10. Procédé de fabrication selon la revendication 8 ou 9, dans lequel l'étape de micro-usinage est une découpe au laser, au jet d'eau ou à la fraiseuse CNC.

11. Procédé de fabrication selon l'une des revendications 8 à 10, comprenant au moins une étape de dépôt d'un revêtement sur au moins une face du corps (10) de chaque aiguille d'affichage (1).

12. Procédé de fabrication selon l'une des revendications 8 à 11, **caractérisé en ce qu'**il comporte au moins une étape de micro-usinage de la face supérieure du corps pour y réaliser des motifs en relief ou des facettes.

## Patentansprüche

1. Zeiger (1), der zur Ausstattung eines Zeitmessgerät vorgesehen ist, umfassend einen Körper (10) sowie ein Rohr (20), in dem eine Öffnung (21) für eine Achse ausgespart ist, die dafür ausgelegt ist, den Zeiger (1) auf einer Antriebsachse einzustellen, wobei der Körper (10) aus einem Verbundmaterial hergestellt ist, das Rohr (20) einen ersten Abschnitt (22) mit einem Durchmesser D1 und einen zweiten Abschnitt (23) mit einem Durchmesser D2 größer als D1 aufweist und wobei das Rohr weiterhin auf seinem gesamten äußeren Umfang oder auf einem Teil hiervon eine Fläche (24) für die Verbindung mit dem Körper (10) des Zeigers (1) besitzt, um die Haftung des Verbundmaterials an dem Rohr (20) sicherzustellen, **dadurch gekennzeichnet, dass** die Verbindungsfläche (24) strukturiert ist und sich über die gesamte Höhe des zweiten Abschnitts (23) oder über einen Teil hiervon erstreckt.

2. Zeiger (1) nach Anspruch 1, wobei der Körper (10) des Zeigers (1) den zweiten Abschnitt (23) des Rohrs (20) umhüllt.

3. Zeiger (1) nach einem der Ansprüche 1 bis 2, wobei das Rohr (20) aus einem metallischen Material wie etwa Messing oder Kupfer-Beryllium hergestellt ist.

4. Zeiger (1) nach einem der Ansprüche 1 bis 3, wobei der Körper (10) aus gespritztem Kunststoff mit Kohlenstofffaserverstärkung oder aus einem gespritzten thermoplastischen Material mit Kohlenstofffaserverstärkung hergestellt ist.

5. Zeiger (1) nach einem der Ansprüche 1 bis 3, wobei die obere Fläche des Körpers (10) Reliefmuster oder Facetten aufweist.

6. Zeiger (1) nach einem der Ansprüche 1 bis 5, wobei die obere Fläche des Körpers (10) eine Bearbeitung aufweist.

7. Zeitmessgerät, **dadurch gekennzeichnet, dass** es mindestens einen Zeiger (1) nach einem der vorhergehenden Ansprüche umfasst.

8. Verfahren für die Herstellung von Zeigern (1), die zur Ausstattung von Zeitmessgeräten vorgesehen sind, wobei jeder Zeiger einen Körper (10) und ein Rohr (20) umfasst, in dem eine Öffnung (21) für eine Achse ausgespart ist, die dafür ausgelegt ist, den Zeiger (1) auf einer Antriebsachse einzustellen, **dadurch gekennzeichnet, dass** es die folgenden Schritte umfasst:
- Anordnen mindestens eines Rohrs (20) in einer Gießform;
- Spritzen des Verbundmaterials, um eine gegossene Platte (30) aus Verbundmaterial auf dem mindestens einen Rohr (20) so zu bilden, dass das mindestens eine Rohr (20) mit der Platte (30) fest verbunden ist;
- Ausführen einer Mikrobearbeitung der Platte (30), um den Körper (10) mindestens eines Zeigers (1) herzustellen.

9. Herstellungsverfahren nach Anspruch 8, wobei der Mikrobearbeitungsschritt so ausgeführt wird, dass gleichzeitig mehrere Zeiger (1) in derselben Platte (30) aus Verbundmaterial hergestellt werden.

10. Herstellungsverfahren nach Anspruch 8 oder 9, wobei der Mikrobearbeitungsschritt aus dem Schneiden mit Laser, mit einem Wasserstrahl oder mit einer CNC-Fräse besteht.

11. Herstellungsverfahren nach einem der Ansprüche 8 bis 10, umfassend mindestens einen Schritt zum Abscheiden einer Beschichtung auf mindestens einer Fläche des Körpers (10) jedes Zeigers (1).

12. Herstellungsverfahren nach einem der Ansprüche 8 bis 11, **dadurch gekennzeichnet, dass** es mindestens einen Schritt zum Mikrobearbeiten der oberen Fläche des Körpers umfasst, um darauf Reliefmuster oder Facetten auszubilden.

## Claims

1. Display hand (1) intended to equip a timepiece, the hand comprising a body (10) and a pipe (20), in which is provided an arbor hole (21) arranged for fitting the display hand (1) onto a drive arbor, the body (10) being made of a composite material, the pipe (20) comprising a first portion (22) of a diameter D1, and a second portion (23) of a diameter D2 which is greater than D1, and comprising over all or part of the outer periphery, a surface (24) for connection to the body (10) of the display hand (1) to ensure the adhesion of the composite material to the pipe (20), **characterized in that** the connecting surface (24) is textured and extends over all or part of the height of the second portion (23).

2. Display hand (1) according to claim 1, wherein the body (10) of the display hand (1) covers the second portion (23) of the pipe (20).

3. Display hand (1) according to any of claims 1 to 2, wherein the pipe (20) is made of a metallic material such as brass or copper-beryllium.

4. Display hand (1) according to any of claims 1 to 3, wherein the body (10) is made of injection moulded carbon fibre reinforced plastic or of injection moulded carbon fibre reinforced thermoplastic.

5. Display hand (1) according to any of claims 1 to 3, wherein the upper surface of the body (10) includes patterns in relief or facets.

6. Display hand (1) according to any of claims 1 to 5, wherein the upper surface of the body (10) includes a treatment.

7. Timepiece **characterized in that** the timepiece includes at least one display hand (1) according to any of the preceding claims.

8. Method for fabricating display hands (1) intended to equip timepieces, each display hand comprising a body (10) and a pipe (20), in which is provided an arbor hole (21) arranged for fitting the display hand (1) onto a drive arbor, **characterized in that** the method comprises the following steps:
- placing at least one pipe (20) inside a mould;
- injecting the composite material to form a sheet (30) of composite material moulded on said at least one pipe (20) such that said at least one pipe (20) is integral with the sheet (30);
- micro-machining the sheet (30) to form the body (10) of at least one hand (1).

9. Fabrication method according to claim 8, wherein the micro-machining step is implemented to simultaneously produce several display hands (1) in the same composite material sheet (30).

10. Fabrication method according to claim 8 or 9, wherein the micro-machining step consists of laser cutting, water jet cutting or CNC milling.

11. Fabrication method according to any of claims 8 to 10, comprising at least one step of depositing a coating on at least one face of the body (10) of each display hand (1).

12. Fabrication method according to any of claims 8 to 11, **characterized in that** the method comprises at least one step of micro-machining the upper face of the body to form therein patterns in relief or facets.
